(19) Europäisches Patentamt

European Patent Office

Office européen des brevets

(11) Publication number: **0 290 689 B1**

(12) **EUROPEAN PATENT SPECIFICATION**

(45) Date of publication of patent specification: **15.04.92**   (51) Int. Cl.⁵: **C01B 3/36**, C10J 3/46

(21) Application number: **87304193.3**

(22) Date of filing: **12.05.87**

(54) **Partial oxidation process.**

(43) Date of publication of application:
**17.11.88 Bulletin 88/46**

(45) Publication of the grant of the patent:
**15.04.92 Bulletin 92/16**

(84) Designated Contracting States:
**DE FR GB IT NL SE**

(56) References cited:
**GB-A- 2 003 496**
**US-A- 2 971 830**
**US-A- 4 411 670**
**US-A- 4 654 164**
**US-A- 4 671 804**

(73) Proprietor: **TEXACO DEVELOPMENT CORPO-RATION**
**2000 Westchester Avenue**
**White Plains, New York 10650(US)**

(72) Inventor: **Najjar, Mitri Salim**
**RD 9, Box 49 Country Club Road**
**Hopewell Junction, NY 12533(US)**

(74) Representative: **Ben-Nathan, Laurence Albert et al**
**Urquhart-Dykes & Lord 91 Wimpole Street London W1M 8AH(GB)**

EP 0 290 689 B1

**EP 0 290 689 B1**

## Description

This invention relates to a process for the partial oxidation of sulfur-containing heavy liquid hydrocarbonaceous fuels with a nickel- and iron-containing ash, sulfur-containing petroleum coke with a nickel- and iron-containing ash, or mixtures thereof, to produce gaseous mixtures comprising $H_2 + CO$ and entrained molten slag. More particularly, it pertains to an additive system for preventing the formation of toxic $Ni_3S_2$ in said molten slag.

The partial oxidation of liquid hydrocarbonaceous fuels such as petroleum products and slurries of solid carbonaceous fuels such as coal and petroleum coke are well known processes. The foreseeable trend for petroleum reserves is that the produced crude will be increasingly heavier and of poorer quality. To compensate for this trend, refiners must employ more "bottom of the barrel" upgrading to provide the desired light products. In industry currently this upgrading is usually provided by some type of coking operation (either delayed or fluid). A good deal of current refinery expansion includes the installation or expansion of coker units. Thus, coking will be a process of general use for some time to come.

A major drawback for coking is the disposal of the product coke. With a reasonably clean coker feed, the product coke can be substituted for carbon in applications such as electrode manufacture where carbon in only relatively pure form is required. As the feed crudes become poorer, however, there are additional factors affecting coker operations which compound the difficulties. First, since the crudes contain more contaminants, i.e. sulfur, metals (predominately vanadium, nickel, and iron), and ash, and these contaminants are concentrated in the product coke, this coke is of a much poorer quality and so is unsuitable for its normal product applications. For example, the presence of toxic $Ni_3S_2$ in the coke ash severely limits its use. Second, because the crudes are heavier, i.e. contain more coke precursors, more of this poorer quality coke is produced from each barrel of ash-containing heavy liquid hydrocarbonaceous fuel. The manufacture of petroleum coke pellets by a delayed coking process is described in Texaco's U.S. Patent No. 3,673,080. A fluid coking process is described in U.S. Patent No. 2,709,676.

The Texaco partial oxidation gasification process offers an alternative processing route for the coke or the ash-containing heavy liquid hydrocarbonaceous fuel. For example, water slurries of petroleum coke are reacted by partial oxidation in Texaco's U.S. Patent No. 3,607,157. Gasification is often cited as a convenient means of coke disposition. The decision to use gasification as a coke disposal means is generally based on economics. The expected rise in energy costs and legislation requiring total use of feed crude should shortly bring about a greater utilization of petroleum coke feeds to the partial oxidation gas generator.

Previous gasification runs with delayed coke and heavy liquid hydrocarbonaceous fuel gave rise to some unexpected operating problems. For example, a very fine intergrowth of toxic nickel subsulfide ($Ni_3S_2$) was found in slag produced by the partial oxidation of sulfur-containing heavy liquid hydrocarbonaceous fuels and/or petroleum coke with said fuels having a nickel- and iron-containing ash. Further, the ash, which normally melts and is discharged from the gasifier as a slag, was not melting completely and being discharged but was building up on the walls of the refractory. Nickel impurities may under certain conditions form troublesome nickel carbonyl deposits downstream in the system. Fluxing as used in coal operations and in U.S. Patent Numbers 1,799,885 and 2,644,745 do not provide a solution to the present problem involving troublesome nickel. The subject invention is an improvement in the art since it permits operation of the partial oxidation gas generator without the production of ash containing toxic nickel subsulfide.

## Summary of the Invention

The present invention provides a process for the production of gaseous mixtures comprising $H_2 + CO$ by the partial oxidation of a fuel feedstock comprising a heavy liquid hydrocarbonaceous fuel containing sulfur and having a nickel- and iron-containing ash or petroleum coke containing sulfur and having a nickel- and iron-containing ash, or mixtures thereof. Further, said feedstocks include a minimum of 0.5 wt. % of sulfur, such as about 1.0 to 4.5 wt. %; and said ash includes a minimum of 0.5 ppm (parts per million) of nickel, such as about 2.0 to 4000 ppm, a minimum of 0.5 ppm of iron, such as about 2.0 to 2000 ppm, and a minimum of 2.0 ppm of silicon, such as about 5 to 7200 ppm, or more. An additive system is provided which prevents the formation of toxic nickel subsulfide ($Ni_3S_2$) in slags generated during the partial oxidation of said feedstocks without raising the activity and pressure of sulfur-bearing gases e.g. $H_2S$, COS. The cost of a downstream gas purification system is thereby minimized. The process includes the steps of (1) mixing together an iron-containing additive with said feedstock; wherein the weight ratio of iron-containing additive to ash in said fuel feedstock is in the range of about 0.5 to 10.0; and the weight ratio of

2

iron to nickel in said mixture of iron-containing additive and fuel feedstock is greater than 0.33; and (2) reacting said mixture from step (1) at a temperature in the range of from 1200° to 1650°C (2200° to 3000°F) and a pressure in the range of about 5 to 250 × 10⁵ Pa (5 to 250 atmospheres) in a free-flow refractory lined partial oxidation reaction zone with a free-oxygen containing gas in the presence of a temperature moderator and in a reducing atmosphere to produce a hot raw effluent gas stream comprising $H_2$ + CO and molten slag; and where in said reaction zone said iron-containing additive combines with at least a portion of said nickel and iron constituents and sulfur found in the feedstock to produce said molten slag.

It is found that the said slag comprises (i) a fluid sulfide phase comprising the sulfides of iron and nickel having a minimum weight ratio of iron to nickel of 0.33, such as in the range of about 1 to 10, and a minimum sulfur content of 36 wt. % (weight percent), such as in the range of about 40 to 60 wt. %; and (ii) an Fe, Ni alloy phase wherein Fe is in the range of about 30 to 95 wt. %, such as about 70 to 90 wt. %, and nickel is in the range of about 5 to 70 wt. %, such as about 10 to 30 wt. %. The process further includes the step of (3) separating non-gaseous materials containing substantially no $Ni_3S_2$ from said hot raw effluent gas stream.

The invention can provide a reduction in the mole ratio $H_2S$ + $COS/H_2$ + CO in the raw effluent gas stream over said mole ratio when said partial oxidation reaction takes place in the absence of said iron-containing addition agent.

In another embodiment, a mixture of sulfur-containing heavy liquid hydrocarbonaceous fuel with a nickel- and iron-containing ash, and said iron-containing additive, is fed to a coker to produce sulfur-containing petroleum coke with a nickel- and iron-containing ash, and with said additive being uniformly dispersed throughout said petroleum coke. This petroleum coke is then reacted in the partial oxidation gas generator to produce synthesis gas, reducing gas, or fuel gas.

In still another embodiment, in addition to the iron-containing additive, a small amount of at least one calcium compound, such as calcium oxides, sulfides or mixtures thereof, is introduced into the reaction zone. The life of any refractory lining in the reaction zone is thereby increased.

Detailed Disclosure of the Invention

The partial oxidation of heavy liquid hydrocarbonaceous fuel and petroleum coke is described respectively in Texaco's U.S. Patent Numbers 4,411,670 and 3,607,156. Further, suitable free-flow refractory-line gas generators and burners that may be used in the production of synthesis gas, reducing gas, or fuel gas from these materials are also described in the aforesaid references. Advantageously, the subject process uses relatively inexpensive fuel feedstocks comprising sulfur-containing heavy liquid hydrocarbonaceous fuel and/or petroleum coke feedstocks with said materials having a nickel- and iron-containing ash. The expression "and/or" as used herein means either one or both of the items or materials specified. Further, these feedstocks include a minimum of 0.5 wt. % of sulfur, such as in the range of about 1.5 to 4.5 wt. %; and said ash includes a minimum of 0.5 ppm of nickel, such as in the range of about 2.0 to 4000 ppm; a minimum of 0.5 ppm iron, such as in the range of about 2.0 to 2000 ppm; a minimum of 2.0 ppm of silicon, such as in the range of about 5 to 7200 ppm, or more.

By definition, the term "sulfur-containing heavy liquid hydrocarbonaceous material or fuel having a nickel- and iron-containing ash" is a petroleum- or coal-derived fuel selected from virgin crude, residue from petroleum distillation and cracking, petroleum distillate, reduced crude, whole crude, asphalt, coal tar, coal-derived oil, shale oil, tar sand oil, and mixtures thereof.

By definition, the term "sulfur-containing petroleum coke having a nickel- and iron-containing ash" is petroleum coke made from sulfur-containing heavy liquid hydrocarbonaceous fuel having a nickel- and iron-containing ash by conventional coke methods such as by the delayed or fluid coking process, such as described in U.S. Patent No. 3,673,080.

Closer study of the ashes derived from the partial oxidation, without an additive, of a feedstock comprising sulfur-containing heavy liquid hydrocarbonaceous fuels and/or petroleum coke having nickel- and iron-containing ashes shows that they are largely composed of oxide and sulfide compounds of nickel, vanadium, iron, along with some normally occurring mineral matter species. The metals present in the ash provide a system that is significantly different from that occurring in coal. A further factor is that the total ash content of the petroleum coke or heavy liquid hydrocarbonaceous fuel may be only about one-half to 5 weight percent (wt. %), whereas coal typically contains 10-20 wt. % ash. The comparatively low ash concentration in petroleum coke and heavy liquid carbonaceous fuel may be the reason why the ash removal problem is only noticed after prolonged gasifier runs. The chance for effective ash and additive mixing that is necessary for effective fluxing is therefore greatly reduced.

It is theorized that in the heavy liquid hydrocarbonaceous material and petroleum coke systems, a good deal of the ash material is liberated as individual molecular species. This is because upon vacuum distillation or coking, the metallic species in the crude, which are generally presented as porphyrin-type structures (metal atoms, oxides or ions thereof confined in an organic framework), are entrapped within the collapsed carbon matrix.

Problems arise when the heavy metal constituents build up in the system. In particular, vanadium and nickel are known to accumulate on the walls of any refractory lining of the reaction zone of the partial oxidation gas generator, and not flow smoothly from the gasifier under normal gasifier conditions. These materials prove to be very corrosive to refractory thereby decreasing the life of the refractory lining of the reaction zone. These problems and others are minimized by the subject process in which the amount of nickel constituents remaining in the reaction zone is substantially reduced or eliminated.

This invention provides an improved iron-containing additive system to prevent the formation of toxic nickel subsulfide ($Ni_3S_2$) in slags generated during the partial oxidation of sulfur, nickel, and iron-containing heavy liquid hydrocarbonaceous and/or petroleum coke feedstocks. Without the subject invention, there may be about 0.1 to 5.0 wt. % of troublesome toxic nickel subsulfide in the slag. Another advantage of the subject invention is the reduction in the activity, pressure, and concentration of sulfur-bearing gases, e.g. $H_2S$ and COS. For example, the concentration of $H_2S + COS$ in the raw product gas stream from the partial oxidation gas generator may be reduced in the range of about 5 to 100%, such as about 20 to 60%, by the subject invention, in comparison with the concentration of $H_2S + COS$ in the raw product gas stream as produced without the iron-containing addition agent. The cost of downstream gas purification is thereby minimized. Further, a means of introducing the addition agent into the system to give maximum effectiveness is provided. In addition, the molten slag is produced with a reduced viscosity in comparison with molten slag produced by the same partial oxidation process but without the addition of said iron-containing addition agent. Accordingly, the molten ash may be readily removed from the gas generator at a lower temperature and safely disposed of without contaminating the environment.

The iron-containing additive comprises iron and/or an iron compound, preferably a water-soluble iron salt, most preferably iron oxide. Sufficient iron-containing additive is introduced to provide a wt. ratio of iron-containing additive to ash in the fuel feedstock in the range of about 0.5 to 10.0, such as about 3.0. This ratio may also be expressed as 3 parts by wt. of iron-containing additive per part by wt. of ash in the fuel feedstock. Further, the weight ratio of iron to nickel in said mixture of iron-containing additive and fuel feedstock is greater than 0.33, such as in the range of about 1 to 10. In the reaction zone of the partial oxidation gas generator, the additive combines with at least a portion, such as substantially all or a large fraction, e.g. about 40 to 100 wt. %, say about 70 to 90 wt. %, of the nickel and iron constituents and sulfur found in the feedstock to produce molten slag comprising the following two phases: (i) a fluid sulfide phase comprising the sulfides of iron and nickel having a minimum weight ratio of iron to nickel of 0.33, such as in the range of about 1 to 10, and a minimum sulfur content of 36 wt. % (weight percent), such as in the range of about 40 to 60 wt. %; and (ii) an Fe, Ni alloy phase wherein Fe is present in the range of about 30 to 95 wt. %, such as about 70 to 90 wt. %, and nickel is present in the range of about 5 to 70 wt. %, such as about 10 to 30 wt. %. The formation of toxic $Ni_3S_2$ is thereby prevented. Advantageously, by the subject invention, there is substantially no nickel subsulfide in the slag. Further, there is a substantial reduction of the mole ratio $H_2S + COS/H_2 + CO$ over said mole ratio when the partial oxidation reaction takes place in the absence of said iron-containing addition agent. The sulfur potential in the gas, and the downstream gas cleaning costs, may be substantially reduced or possibly eliminated.

The liquid sulfide phase materials in the molten slag are very fluid at the temperature prevailing in the reaction zone. The viscosity of these materials at 1093°C (2000°F) is in the range of about 0.5 to 10 Pa.s (5 to 100 poises). Further, it was unexpectedly found that these liquid sulfide phase materials have a strong wetting capability for other metal constituents in the slag, such as the high temperature non-flowing vanadium-containing oxide laths and spinels. These liquid sulfide phase materials function in a completely different manner than that of a typical fluxing additive which may be used for example to solubilize slag constituents in coal. For example, it was unexpectedly found that these liquid sulfide phase materials act as washing agents. They do not solubilize the troublesome vanadium-containing oxide laths and spinels. Rather, they serve as a carrier and wash them out of the reaction zone. These washing agents wash at least a portion, such as from about 40 to 100 wt. %, and more specifically such as about 60 to 80 wt. %, and preferably all, of the vanadium-containing contaminants out of the reaction zone of the partial oxidation gas generator. The mixture of these liquid sulfide phase materials and vanadium oxide is referred to herein as slag and comprises about 1 to 10 wt. %, such as about 4 to 8 wt. %, of vanadium oxide.

The effects of high and low concentrations of sulfur and silicon in the mixture of iron-containing additive and fuel feedstock on the formation of major and minor phases in the slag that brings about the

destabilization of $Ni_3S_2$ are summarized in Table I below. With respect to the fuel feedstock, by definition: "low sulfur" means about 0.5 to 1.5 wt. % sulfur (basis weight of fuel feedstock); "high sulfur" means about 1.6 to 4.5 wt. % sulfur (basis weight of fuel feedstock); "low silicon" means silicon in the range of about 10 to 400 ppm (basis weight of ash in the ash-containing fuel feedstock); and "high silicon" means silicon in the range of about 410 ppm to 7200 ppm or more (basis weight of ash in the ash-containing fuel feedstock). The major phase constitutes about 90 wt. % or more of the slag. The minor phase comprises the remainder of the slag, and is at least 1 to 10 wt. %

Table I

| Effect of Sulfur and Silicon Content in Fuel Feedstock on the Major and Minor Phases in the Slag | | | |
|---|---|---|---|
| Low Sulfur Low Silicon | Low Sulfur High Silicon | High Sulfur High Silicon | High Sulfur Low Silicon |
| Major Sulfide Phase of Iron and Nickel Fe-Ni Alloy Minor Phase | Fe-Ni Alloy Major Phase Minor Sulfide Phase of Iron and Nickel | About 20 to 80 wt. % Fe-Ni Alloy Remainder Sulfide Phase of Iron and Nickel | Major Sulfide Phase of Iron and Nickel Fe-Ni Alloy Minor Phase |

In another embodiment of the invention, it was unexpectedly found that the softening temperature of the iron-containing addition agent could be reduced by about 56-167°C (100-300°F) by introducing a calcium compound along with the iron-containing addition agent. The calcium compound may be calcium oxide, calcium carbonate or calcium hydroxide. By adding calcium in this manner, the partial oxidation gas generator may be started up at a lower temperature, e.g. about 111 to 167°C (200 to 300°F) lower. The calcium compound is temporarily introduced into the partial oxidation reaction zone at start-up in admixture with the fuel feedstock and/or iron-containing addition agent in the critical amount of about 2.0 to 8.0 wt. % or below of the iron-containing addition agent. By lowering the softening temperature of the iron-containing addition agent, the calcium compound enhances the rate of sulfur pick-up in the slag. It was found that when the addition of calcium compound exceeded 8.0 wt. % of the iron-containing addition agent then calcium sulfide and calcium carbonate would clog up the central passage of the dip tube thereby blocking the discharge of the hot effluent gas stream from the reaction zone into the quench water.

Shortly after start-up when the sulfur begins to transfer into the molten slag, the liquid sulfide slag of iron and nickel will lower the softening temperature of the iron-containing agent thus eliminating thereafter the need of introducing calcium. Excess calcium will pick up the sulfur to form an undesirable viscous calcium sulfide phase. Keeping the amount of calcium to 8.0 wt. % and below of the iron-containing addition agent will ensure that the fluid iron and nickel sulfide phase will effectively wash the localized high melting calcium sulfide phase and the high melting vanadium laths and spinels. The use of calcium in this manner in admixture with the iron-containing additive is substantially different from the use of an ash fluxant, as described in U.S. Patent No. 4,277,365.

Advantageously by the subject process, the molten slag which is produced in the reaction zone is free from toxic $Ni_3S_2$ and has a lower viscosity, e.g. less than 10 Pa.s (100 poises) at 1093°C (2000°F), in comparison with prior art high viscosity slag. This facilitates slag removal. Further, at shut-down of the gasifier, the refractory walls of the reaction zone are provided clean with substantially no net accumulation of vanadium contaminants.

The partial oxidation reaction takes place in a reducing atmosphere under the following conditions: temperature - 1200°C to 1650°C (2200°F to 3000°F), such as about 1260°C to 1482°C (2300°F to 2700°F), say about 1496°C to 1552°C (2725°F to 2825°F); pressure - about $5 \times 10^5$ to $250 \times 10^5$ Pa (5 to 250 atmospheres), such as about $15 \times 10^5$ to $200 \times 10^5$ Pa (15 to 200 atmospheres); when steam or water is used as a temperature moderator, the $H_2O$/fuel weight ratio is in the range of about 0.1 to 5.0, such as about 0.2 to 0.9; and the atomic ratio of free oxygen to carbon in the fuel (O/C ratio) is in the range of about 0.6 to 1.6, such as about 0.8 to 1.4.

The composition of the hot, raw effluent gas stream directly leaving the reaction zone of the free-flow partial oxidation gas generator is about as follows, in mole percent: $H_2$ 10 to 70, CO 15 to 57, $CO_2$ 0.1 to 25, $H_2O$ 0.1 to 20, $CH_4$ nil to 60, $H_2S$ nil to 3, COS nil to 0.1, $N_2$ nil to 60, and Ar nil to 2.0. Particulate carbon is present in the range of about 0.2 to 20 weight % (basis carbon content in the feed). Ash is present in the range of about 0.5 to 5.0 wt. %, such as about 1.0 to 3.0 wt. % (basis total weight of fuel feed). Depending on the composition after removal of the entrained particulate carbon and ash by quench cooling and/or scrubbing with water and with or without dewatering, the gas stream may be employed as synthesis gas, reducing gas or fuel gas.

With the present invention, the iron-containing additive may be selected on the basis of serendipitous catalytic properties in addition to its use in the generation of the washing agent, as previously described. For example, it may act to produce more and/or a better quality of light products from the coker operation. It may also aid in the gasification reactions either by increasing the reaction rate and thus the throughput capacity of the gasifier or by increasing the conversion of the soot and thus the overall efficiency of the process. Again, however, this invention does not depend on the catalytic properties of the iron-containing additive.

It was unexpectedly found that a preferred iron-containing additive for mixing with the sulfur-containing heavy liquid hydrocarbonaceous material having a nickel- and iron-containing ash or sulfur-containing petroleum coke having a nickel- and iron-containing ash comprises iron and/or iron compounds. These compounds may be selected from oxides, sulfides, sulfates, carbonates, cyanides, chlorides, nitrates, and mixtures thereof. The iron compound may be a water-soluble iron salt. The iron-containing additive may comprise an iron-containing portion which is a ferro- or ferri-organic compound selected from naphthenates, oxalates, acetates, citrates, benzoates, oleates, sulfides, tartrates, and mixtures thereof. The iron-containing additive may comprise about 30.0 to 100 wt. % of an iron compound.

In the preferred embodiment of the subject invention, a mixture comprising the aforesaid fuel feedstock comprising sulfur-containing heavy liquid hydrocarbonaceous fuel having a nickel- and iron-containing ash and/or the sulfur-containing petroleum coke having a nickel- and iron-containing ash, the iron-containing additive, and optionally said previously described calcium compound is introduced into the partial oxidation gasifier. In another embodiment, the iron-containing additive, and optionally said calcium compound, are mixed with the sulfur-containing heavy liquid hydrocarbonaceous material having a nickel- and iron-containing ash. The mixture is then fed into a conventional coking unit to produce petroleum coke. By this means, the finely ground iron-containing additive, and optionally said calcium compound, may be intimately mixed throughout the petroleum coke product. The comminuted iron-containing additive, calcium compound, and the comminuted petroleum coke and mixtures thereof have a particle size so that 100% passes through a sieve of the size ASTM E-11 Standard Sieve Designation in the range of about $425 \times 10^{-6}$ m (425 microns) to $38 \times 10^{-6}$ m (38 microns), or below. The ingredients of the aforesaid mixtures may be separately ground and then mixed together. Alternatively, the ingredients may be wet- or dry-ground together. Intimate mixing of the solid materials is thereby achieved, and the particle sizes of each of the solid materials in the mixture may be substantially the same. The dry-ground mixture may be mixed with water or a liquid hydrocarbonaceous material or both to produce a pumpable slurry having a solids content in the range of about 50-65 wt. %. Alternatively, the solid materials may be wet-ground with the liquid slurry medium. Alternatively, the mixture of particulate solids may be entrained in a gaseous medium and then introduced into the gas generator. The gaseous transport medium may be steam, $CO_2$, $N_2$, free-oxygen containing gas, recycle synthesis gas, or mixtures thereof.

In the embodiment wherein ground iron-containing additive is mixed with the sulfur-containing heavy liquid hydrocarbonaceous fuel having a nickel- and iron-containing ash and fed into a coker, the iron-containing washing additive may be introduced directly into the ash-containing petroleum liquid feed to the vacuum distillation tower, which normally precedes the coker unit. In either unit operation (coking or distillation), substantially all of the iron-containing additive should stay behind in the desired bottoms stream. In other words, there should be little, if any, carry over of the additive with the lighter products. A possible advantage for mixing the additive with the vacuum tower feedstream in preference to the bottoms stream (i.e. coker feed) is that the feed to the vacuum tower is significantly less viscous than the bottoms from the vacuum tower. A more thorough mixing may be thereby effected.

For example, a mixture comprising a high-boiling liquid petroleum, i.e. sulfur-containing heavy liquid hydrocarbonaceous fuel having a nickel- and iron-containing ash and the comminuted iron-containing additive, with or without calcium compound, at a temperature in the range of about 343°C to 499°C (650°F to 930°F) is introduced into a delayed coking zone, for example by way of line 33, such as shown and described in Texaco's U.S. Patent No. 3,673,080. At a temperature in the range of about 427°C to 479°C (800°F to 895°F), and a gauge pressure in the range of from $138 \times 10^3$ Pa (20 to 60 psig), uncondensed hydrocarbon effluent vapour and steam are removed overhead and petroleum coke in admixture with iron-containing additive, and optionally the calcium compound, is removed from the bottom of said delayed coking zone.

In another embodiment, a mixture comprising a sulfur-containing high-boiling liquid petroleum having a nickel- and iron-containing ash and the comminuted iron-containing additive, with or without calcium compound, at a temperature in the range of about 288°C to 399°C (550°F to 750°F) is introduced into a fluidized bed coking zone for example by way of line 31, such as shown and described in U.S. Patent No. 2,709,676. At a temperature in the range of about 538°C to 649°C (1000°F to 1200°F) and a gauge pressure in the range of from 69 × 10³ to 138 × 10³ Pa (10 to 20 psig), uncondensed hydrocarbon effluent vapour and steam are removed overhead and said petroleum coke is removed from the bottom of said coking zone.

In other embodiments, this invention may be applied to other similar petroleum processes that produce a stream suitable for gasification. Any "bottom of the barrel" process that does not upgrade the bottoms or residue stream to extinction must ultimately produce such a stream. These streams, either liquid or normally solid but pumpable at elevated temperatures, will produce the same gasification problems as discussed for coke. Thus, the invention of introducing an iron-containing additive and optionally calcium compound as part of the petroleum processing prior to gasification should, depending on the specific process, produce a feedstock that will be free of the gasification problems mentioned above. Most of these processes employ vacuum distillation as pretreatment. Accordingly, as described above, the iron-containing addition agent may be mixed with the vacuum distillation feed having a nickel- and iron-containing ash. The additives will then emerge from the distillation column in the bottoms stream. In turn, the bottoms stream is the feed stream for the upgrading process. This incorporation of the iron-containing additive, and optionally the calcium compound, should not adversely affect these processes, and the addition agents should ultimately emerge with the nickel- and iron-containing residue stream from each respective process. In all of these processes, this residue stream should be suitable for gasification by partial oxidation.

## EXAMPLES

For a better understanding of the present invention, reference will now be made to a number of illustrative Examples.

## EXAMPLE I

Synthesis gas is produced in a free-flow refractory lined partial oxidation reaction zone, such as that shown and described in U.S. Patent No. 3,607,157. In mole % dry basis the composition of the gas is substantially as follows: $H_2$ - 25 to 45; CO - 20 to 55; $CO_2$ - 5 to 35; $CH_4$ - 0.06 to 8.0; and $H_2S$ + COS - nil to 3.0. The feedstock comprises an atomized aqueous dispersion or a dispersion of substantially dry sulfur-containing petroleum coke having a nickel-containing ash and being entrained in a gaseous transport medium comprises a mixture of free-oxygen containing gas and steam. The ash in the petroleum coke comprises about 5.0 wt. % of nickel, and about 2.5 wt. % iron, and contains less than about 400 parts per million of silicon. About 4.34 wt. % of sulfur is present in the petroleum coke. The petroleum coke has uniformly dispersed therein an iron-containing additive comprising about 100 wt. % of iron oxide. The weight ratio of iron-containing additive to ash is about 5 to 1. The weight ratio of iron to nickel in the reaction zone is about 10 to 1. In another run the sulfur-containing petroleum coke having a nickel-containing ash and being in admixture with the iron- and calcium-containing additive is introduced into the free-flow partial oxidation zone as a pumpable slurry of petroleum coke in water. The solids content of the slurry is about 60 weight percent.

The petroleum coke is reacted with a free-oxygen containing gas, e.g. air, in the presence of a temperature moderator, e.g. $H_2O$, in the refractory-lined partial oxidation reaction zone at an autogenous temperature of about 1510°C (2750°F) and a pressure of about 6 × 10⁵ Pa (6 atmospheres). The molten slag droplets are readily separated from the hot effluent gas stream leaving the reaction zone by gravity or by quenching and/or scrubbing the gas stream with water or other gas scrubbing medium. The ash fusion temperature for the slag is below 1149°C (2100°F). In comparison, the ash fusion of the coarse slag with no iron-containing additive is greater than 1510°C (2750°F). There is no toxic $Ni_3S_2$ in the slag. The chemical composition of the slag in wt. % is shown in Table II below.

Table II

| Chemical Composition of Slag | | | | | | | |
|---|---|---|---|---|---|---|---|
| FeS | NiS | FeO | CaO | CaS | $SiO_2$ | $V_2O_3$ | Others[1] |
| 81.1 | 1.2 | 4.1 | 0.8 | 1.2 | 1.1 | 6.3 | 4.2 |

[1]Minor ash components and refractory pick-up

## EXAMPLE II

Aqueous slurries of sulfur-containing delayed petroleum coke having nickel- and iron-containing ashes and having a solids content of 0.52 wt. % were subjected to partial oxidation in a free-flow reaction zone at a temperature of 1427°C (2600°F) and a pressure of $6 \times 10^6$ Pa (60 atmospheres). Run No. 1 was made with no iron-containing additive and with a weight ratio of iron to nickel in the fuel feedstock of 0.25. Run No. 2 was made with a weight ratio of iron oxide additive to ash in the fuel feedstock of 6.0, and with a weight ratio of iron to nickel in the mixture of iron-containing additive and fuel feedstock of 18.9. The results are summarized in Table III.

**Table III**

| Run No. | Iron-Containing Additive | Sulfur in Feed wt.% | Composition of Synthesis Gas Vol.% | | | | | % S in Feed Converted to | | Toxic $Ni_3S_2$ in Slag wt.% |
|---|---|---|---|---|---|---|---|---|---|---|
| | | | $H_2S$ | COS | $H_2$ | CO | $CO_2$ | $H_2S+COS$ | Slag | |
| 1 | No | 3.92 | 1.05 | 0.04 | 33.49 | 52.41 | 12.01 | 94.11 | 5.89 | 0.73 |
| 2 | Yes | 4.34 | 0.81 | 0.02 | 31.72 | 52.74 | 11.80 | 66.17 | 33.83 | 0 |

From the data in Table III, it is clearly evident that by introducing into the partial oxidation gas generator the subject iron-containing additive along with the petroleum coke feedstock, there is a reduction of about 28 volume percent in the amount of sulfur in the petroleum coke feedstock that is converted into sulfur-containing gases. This sulfur is easily removed in the molten slag thereby reducing the cost of downstream gas purification. Further, the slag from Run No. 2 may be disposed of safely since it contains substantially no toxic $Ni_3S_2$.

**Claims**

1. A process for the production of gaseous mixtures comprising $H_2$ + CO by the partial oxidation of a fuel feedstock comprising sulfur-containing heavy liquid hydrocarbonaceous fuel and/or petroleum coke, said fuels having nickel and iron-containing ashes, or mixtures thereof; and said feedstock includes a minimum of 0.5 wt. % of sulfur; and said ash includes a minimum of 0.5 ppm nickel, a minimum of 0.5 ppm iron, and a minimum of 2.0 ppm of silicon; said process comprising:

    (1) mixing together an iron-containing additive with said fuel feedstock; wherein the weight ratio of iron-containing additive to ash in said fuel feedstock is in the range of about 0.5 to 10.0; and the weight ratio of iron to nickel in said mixture of iron-containing additive and fuel feedstock is greater than 0.33;

    (2) reacting said mixture from step (1) at a temperature in the range of 1200°C to 1650°C (2200°F to 3000°F) and a pressure in the range of about to $5 \times 10^5$ to $250 \times 10^5$ Pa (5 to 250 atmospheres) in a free-flow refractory lined partial oxidation reaction zone with a free-oxygen containing gas in the presence of a temperature moderator and in a reducing atmosphere to produce a hot raw effluent gas stream comprising $H_2$ + CO and entrained molten slag, and where in said reaction zone said iron-containing additive combines with at least a portion of said nickel and iron constituents and sulfur found in the feedstock to produce said molten slag comprising the following two phases; (i) a fluid sulfide phase comprising the sulfides of iron and nickel having a minimum weight ratio of iron to nickel of 0.33, and a minimum sulfur content of 36 wt. %; and (ii) an Fe, Ni alloy phase wherein Fe is in the range of about 30 to 95 wt. %, and nickel is in the range of about 5 to 70 wt. %; wherein there is a reduction in the mole ratio $H_2S$ + $COS/H_2$ + CO in the raw effluent gas stream over said mole ratio when said partial oxidation reaction takes place in the absence of said iron-containing addition agent; and

    (3) separating non-gaseous materials containing substantially no $Ni_3S_2$ from said hot raw effluent gas stream.

2. A process according to claim 1, wherein said preparing step (1) comprises the further steps of:

    (i) coking said mixture from (1) to produce sulfur-containing petroleum coke having a nickel- and iron-containing ash and having dispersed therein said iron-containing additive; and

    (ii) introducing the petroleum coke from (i) into the partial oxidation reaction zone in (2) as a pumpable slurry of petroleum coke in water, liquid hydrocarbonaceous fuel or mixtures thereof, or as substantially dry petroleum coke entrained in a gaseous transport medium to enable said reacting step (2) to proceed.

3. A process according to claim 2, wherein said coking step (i) comprises the steps of (a) introducing the mixture from step (1) at a temperature in a range of from 343°C to 499°C (650°F to 930°F) into a delayed coking zone where, at a temperature in the range of from 427°C to 479°C (800°F to 895°F) and a gauge pressure in the range of from $138 \times 10^3$ to $414 \times 10^3$ Pa (20 to 60 psig), uncondensed hydrocarbon effluent vapour and steam are removed overhead and said sulfur-containing petroleum coke having a nickel- and iron-containing ash and having uniformly dispersed therein said iron-containing additive is removed from the bottom.

4. A process according to claim 2, wherein said coking step (i) comprises the steps of (a) introducing the mixture from step (1) at a temperature in a range of from 288°C to 399°C (550°F to 750°F) into a fluidized bed coking zone where at a temperature in the range of from 538°C to 649°C (1000°F to 1200°F) and a pressure in the range of from $69 \times 10^3$ to $138 \times 10^3$ Pa (10 to 20 psig), uncondensed hydrocarbon effluent vapour and steam are removed overhead and said petroleum coke is removed from the bottom.

5. A process according to any one of the preceding claims, wherein a calcium compound in the amount of about 2.0 to below 8.0 wt. % of said iron-containing addition agent is introduced into the partial oxidation reaction zone only at start-up to reduce the softening temperature of the iron-containing addition agent, and then the introduction of said calcium compound is discontinued.

6. A process according to any one of the preceding claims, wherein the fuel feedstock includes said liquid fuel, and the said liquid fuel is advanced through a vacuum distillation unit, and wherein said iron-containing additive is introduced into said fuel at the feed to, or the bottoms from, the vacuum distillation unit.

7. A process according to any one of the preceding claims, wherein said iron-containing additive comprises iron and/or iron compounds selected from oxides, sulfides, sulfates, carbonates, cyanides, chlorides, nitrates, and mixtures thereof.

8. A process according to any one of the preceding claims, wherein the iron-containing additive comprises an iron-containing portion which is a ferro- or ferri-organic compound selected from naphthenates, oxalates, acetates, citrates, benzoates, oleates, sulfides, tartrates, and mixtures thereof.

9. A process according to any one of the preceding claims, wherein said iron-containing additive comprises iron oxide in admixture with calcium oxide.

10. A process according to any one of the preceding claims, wherein said sulfur-containing heavy liquid hydrocarbonaceous fuel having a nickel- and iron-containing ash is a pumpable slurry of petroleum coke in water, liquid hydrocarbon fuel or mixtures thereof.

11. A process according to any one of the preceding claims, wherein said fuel feedstock contains from 0.5 to 1.5 wt. % sulfur and from 10 to 400 ppm of silicon.

12. A process according to any one of claims 1 to 10, wherein said fuel feedstock contains from 0.5 to 1.5 wt. % sulfur and from 410 ppm to 7200 ppm or more of silicon.

13. A process according to any one of claims 1 to 10, wherein said fuel feedstock contains about 1.6 to 4.5 wt. % of sulfur and about 410 ppm to 7200 ppm or more of silicon.

14. A process according to any one of claims 1 to 10, wherein said fuel feedstock contains from 1.6 to 4.5 wt. % of sulfur and from 10 to 400 ppm of silicon.

15. A process according to any one of the preceding claims, wherein said sulfur-containing heavy liquid hydrocarbonaceous fuel having nickel- and iron-containing ashes is a high boiling liquid petroleum feed to, or the bottoms from, a vacuum tower or a fractionator.

16. A process according to any one of the preceding claims, wherein said mixture of iron-containing additive and feedstock produced in preparing step (1) has such a particle size that substantially all of the mixture passes through a sieve of the size ASTM E-11 Standard Sieve Designation in the range of from $425 \times 10^{-6}$ m to $38 \times 10^{-6}$ m (425 microns to 38 microns).

**Revendications**

1. Un procédé de fabrication de mélanges gazeux comprenant $H_2$ + CO par oxydation partielle d'une charge de départ de carburant comprenant un carburant d'hydrocarbures liquides lourds contenant du soufre et/ou du coke de pétrole, les cendres desdits carburants contenant du fer et du nickel, ou leurs mélanges ; et ladite charge de départ comprend au moins 0,5 % en poids de soufre ; et ladite cendre comprend au moins 0,5 ppm de nickel, au moins 0,5 ppm de fer, et au moins 2,0 ppm de silicium ; ledit procédé comprenant :
   (1) le mélange d'un additif contenant du fer avec ladite charge de départ de carburant ; dans lequel le rapport pondéral entre l'additif contenant du fer et la cendre dans ladite charge de départ de carburant se situe dans la fourchette allant d'environ 0,5 à 10,0 ; et le rapport pondéral entre le fer et le nickel dans ledit mélange d'additif contenant du fer et la charge de départ de carburant est supérieur à 0,33 ;
   (2) la réaction dudit mélange résultant de l'étape (1) à une température se situant dans la fourchette de 1200 °C à 1650 °C (2200 °F à 3000 °F) et à une pression se situant dans la fourchette d'environ 5 x $15^5$ à 250 x $10^5$ Pa (5 à 250 atmosphères) dans une zone de réaction d'oxydation partielle alignée réfractaire à flux libre contenant du gaz sans oxygène en présence d'un modérateur de température et dans une atmosphère en réduction pour produire un flux de gaz brut effluent chaud comprenant $H_2$ + CO et une scorie fondue entraînée, et dans ladite zone de réaction ledit additif contenant du fer s'associe avec au moins une partie desdits constituants de nickel et de fer et

11

le soufre contenus dans la charge de départ pour produire ladite scorie fondue comprenant les deux phases suivantes ; (i) une phase sulfurique fluide comprenant les sulfures de fer et de nickel ayant un rapport pondéral minimal entre le fer et le nickel de 0,33, et une teneur minimale en soufre de 36 % en poids ; et (ii) une phase d'alliage de Fe et de Ni dans laquelle le Fe se situe dans la fourchette d'environ 30 à 95 % en poids, et le nickel se situe dans la fourchette d'environ 5 à 70 % en poids ; dans laquelle il se produit une réduction du rapport molaire $H_2S$ + $COS/H_2$ + CO dans le flux de gaz brut effluent par rapport audit rapport molaire lorsque ladite réaction d'oxydation partielle se déroule en l'absence dudit agent d'addition contenant du fer ; et

(3) la séparation des matériaux non gazeux ne contenant essentiellement pas de $NI_3S_2$ provenant dudit flux de gaz brut effluent.

2. Un procédé conforme à la revendication 1, dans lequel ladite étape de préparation (1) comprend les étapes complémentaires de :

(i) cokéfaction dudit mélange de l'étape (1) pour produire un coke de pétrole contenant du soufre ayant une cendre contenant du nickel et du fer et dans laquelle est dispersé ledit additif contenant du fer ; et

(ii) introduction du coke de pétrole de l'étape (i) dans la zone de réaction d'oxydation partielle de l'étape (2) comme une boue pouvant être pompée de coke de pétrole dans l'eau, de fluide d'hydrocarbures liquides ou de leurs mélanges, ou de la quantité suffisante de coke de pétrole sec entraîné dans un milieu de transport gazeux pour permettre le déroulement de ladite étape de réaction (2).

3. Un procédé conforme à la revendication 2, dans lequel ladite étape de cokéfaction (i) comprend les étapes (a) d'introduction du mélange obtenu dans l'étape (1) à une température se situant dans une fourchette de 343 °C à 499 °C (650 °F à 930 °F) dans une zone de cokéfaction différée où, à une température se situant dans la fourchette de 427 °C à 479 °C (800 °F à 895 °F) et à une pression au manomètre se situant dans la fourchette de 138 x $10^3$ à 414 x $10^3$ Pa (20 à 60 psig), la fumée et la vapeur d'effluents d'hydrocarbures non condensés sont extraites du dessus et ledit coke de pétrole contenant du soufre comportant une cendre contenant du fer et du nickel et dans lequel est uniformément dispersé ledit additif contenant du fer est extrait du fond.

4. Un procédé conforme à la revendication 2, dans lequel ladite étape de cokéfaction (i) comprend les étapes (a) d'introduction du mélange obtenu dans l'étape (1) à une température comprise dans une fourchette de 288 °C à 399 °C (550 °F à 750 °F) dans une zone de cokéfaction en lit fluidisé où à une température comprise dans la fourchette de 538 °C à 649 °C (1000 °F à 1200 °F) et à une pression comprise dans la fourchette de 69 x $10^3$ à 138 x $10^3$ Pa (10 à 20 psig), la fumée et la vapeur d'effluents d'hydrocarbures non condensés sont extraites du dessus et ledit coke de pétrole est extrait du fond.

5. Un procédé conforme à l'une quelconque des revendications précédentes, dans lequel un composé calcique en quantité d'environ 2,0 à moins de 8,0 % en poids dudit agent d'addition contenant du fer est introduit dans la zone de réaction d'oxydation partielle uniquement au début pour réduire la température adoucie de l'agent d'addition contenant le fer, ce qui est suivi par l'arrêt de l'introduction dudit composé calcique.

6. Un procédé conforme à l'une quelconque des revendications précédentes, dans lequel la charge de départ de carburant comprend ledit carburant liquide, et ledit carburant liquide passe au travers d'un appareil de distillation dans le vide, et dans lequel ledit additif contenant du fer est introduit dans ledit carburant à l'arrivée, ou au fond, de l'appareil de distillation dans le vide.

7. Un procédé conforme à l'une quelconque des revendications précédentes, dans lequel ledit additif comprenant du fer comprend du fer et/ou des composés ferriques choisis parmi les oxydes, les sulfures, les sulfates, les carbonates, les cyanures, les chlorures, les nitrates, et leurs mélanges.

8. Un procédé conforme à l'une quelconque des revendications précédentes, dans lequel l'additif contenant du fer comprend une partie contenant du fer qui est composé organique ferreux ou ferrique choisi parmi les naphténates, les oxalates, les acétates, les citrates, les benzoates, les oléates, les sulfures, les tartrates, et leurs mélanges.

12

**9.** Un procédé conforme à l'une quelconque des revendications précédentes, dans lequel ledit additif contenant du fer comprend de l'oxyde de fer mélangé avec de l'oxyde de calcium.

**10.** Un procédé conforme à l'une quelconque des revendications précédentes, dans lequel ledit carburant d'hydrocarbures liquides lourds contenant du fer comportant une cendre contenant du nickel et du fer est une boue pouvant être pompée de coke de pétrole dans l'eau, de carburant d'hydrocarbures liquides ou de leurs mélanges.

**11.** Un procédé conforme à l'une quelconque des revendications précédentes, dans lequel ladite charge de départ de carburant contient de 0,5 à 1,5 % en poids de soufre et de 10 à 400 ppm de silicium.

**12.** Un procédé conforme à l'une quelconque des revendications 1 à 10, dans lequel ladite charge de départ de carburant contient de 0,5 à 1,5 % en poids de soufre et de 410 ppm à 7200 ppm ou plus de silicium.

**13.** Un procédé conforme à l'une quelconque des revendications 1 à 10, dans lequel ladite charge de départ de carburant contient environ 1,6 à 4,5 % en poids de soufre et environ 410 ppm à 7200 ppm ou plus de silicium.

**14.** Un procédé conforme à l'une quelconque des revendications 1 à 10, dans lequel ladite charge de départ de carburant contient environ 1,6 à 4,5 % en poids de soufre et de 10 ppm à 400 ppm de silicium.

**15.** Un procédé conforme à l'une quelconque des revendications précédentes, dans lequel ledit carburant d'hydrocarbures liquides lourds contenant du fer qui présente des cendres contenant du nickel et du fer est un pétrole liquide à point d'ébullition élevé à l'arrivée, ou au fond, d'une tour de distillation sous vide ou d'une tour de fractionnement.

**16.** Un procédé conforme à l'une quelconque des revendications précédentes, dans lequel ledit mélange d'additif contenant du fer et de la charge de départ fabriqué dans l'étape de préparation (1) a une grandeur de particules telle que la plus grande partie du mélange passe au travers d'un tamis de la dimension ASTM E-11 de la Désignation des Normes de Tamis se trouvant dans la fourchette de 425 x $10^{-6}$ m à 38 x $10^{-6}$ m (425 microns à 38 microns).

**Patentansprüche**

**1.** Verfahren zur Herstellung gasförmiger Gemische, die $H_2$ + CO umfassen, durch die Teiloxidation eines Brennstoff-Ausgangsmaterials, umfassend schwefelhaltigen schweren flüssigen kohlenwasserstoffhaltigen Brennstoff und/oder Erdölkoks, wobei besagte Brennstoffe nickel- und eisenhaltige Aschen besitzen, oder Gemische derselben; wobei besagtes Ausgangsmaterial ein Minimum von 0,5 Gew.-% Schwefel einschließt; und besagte Asche ein Minimum von 0,5 ppm Nickel, ein Minimum von 0,5 ppm Eisen und ein Minimum von 2,0 ppm Silicium einschließt; wobei besagtes Verfahren folgendes umfaßt:
(1) Zusammenmischen eines eisenhaltigen Zusatzstoffes mit besagtem Brennstoff-Ausgangsmaterial; wobei das Gewichtsverhältnis von eisenhaltigem Zusatzstoff zu Asche in besagtem Brennstoff-Ausgangsmaterial im Bereich von etwa 0,5 bis 10,0 liegt; und das Gewichtsverhältnis von Eisen zu Nickel in besagtem Gemisch aus eisenhaltigem Zusatzstoff und Brennstoff-Ausgangsmaterial größer als 0,33 ist;
(2) Umsetzen besagten Gemisches aus Schritt (1) in einer Reaktion bei einer Temperatur im Bereich von 1200°C bis 1650°C (2200°F bis 3000°F) und einem Druck im Bereich von etwa 5 x $10^5$ bis 250 x $10^5$ Pa (5 bis 250 Atmosphären) in einer feuerfest ausgekleideten Freifluß-Teiloxidationsreaktionszone mit einem Gas, das freien Sauerstoff enthält, in Gegenwart eines Temperaturmoderators und in einer reduzierenden Atmosphäre, um einen heißen abgehenden Rohgasstrom herzustellen, der $H_2$ + CO und mitgerissene geschmolzene Schlacke umfaßt, und wo in besagter Reaktionszone besagter eisenhaltiger Zusatzstoff sich mit wenigstens einem Teil besagter Nickel- und Eisenbestandteilen und im Ausgangsmaterial befindlichem Schwefel verbindet, um besagte geschmolzene Schlacke zu erzeugen, die die folgenden zwei Phasen umfaßt: (i) eine flüssige Sulfidphase, die die Sulfide von Eisen und Nickel umfaßt, mit einem Minimum-Gewichtsverhältnis von Eisen zu Nickel von 0,33 und einem Minimum-Schwefelgehalt von 36 Gew.-%; und (ii) eine Fe, Ni-Legierungsphase, in der Fe im Bereich von etwa 30 bis 95 Gew.-% vorliegt und Nickel im Bereich von etwa 5 bis 70 Gew.-%; wobei es eine Verringerung im Molverhältnis $H_2$ + $COS$/$H_2$ + $CO$ im abgehenden Rohgasstrom gibt gegenüber besagtem Molverhältnis, wenn besagte Teiloxidationsreaktion in Abwesenheit von besagtem eisenhaltigen Zusatzmittel stattfindet; und

(3) Abtrennen nicht-gasförmiger Materialien, die im wesentlichen kein $Ni_3S_2$ enthalten, von besagtem heißen abgehenden Rohgasstrom.

2.  Verfahren nach Anspruch 1, dadurch gekennzeichnet, daß besagter Herstellungsschritt (1) die folgenden weiteren Schritte umfaßt:

(i) Verkoken besagten Gemisches aus (1), um schwefelhaltigen Erdölkoks herzustellen, mit einer nickel- und eisenhaltigen Asche und besagtem darin dispergierten eisenhaltigen Zusatzstoff; und
(ii) Einbringen des Erdölkokses aus (i) in die Teiloxidationsreaktionszone in (2) als pumpbare Aufschlemmung von Erdölkoks in Wasser, flüssigem kohlenwasserstoffhaltigen Brennstoff oder Gemischen derselben oder als im wesentlichen trockenen Erdölkoks, der in einem gasförmigen Transportmedium mitgerissen wird, um das Ablaufen besagten Reaktionsschrittes (2) zu ermöglichen.

3.  Verfahren nach Anspruch 2, dadurch gekennzeichnet, daß besagter Verkokungsschritt (i) die Schritte umfaßt: (a) Einbringen des Gemisches aus Schritt (1) bei einer Temperatur im Bereich von 343°C bis 499°C (650°F bis 930°F) in eine Zone verzögerter Verkokung, in der, bei einer Temperatur im Bereich von 427°C bis 479°C (800°F bis 895°F) und einem Manometerdruck im Bereich von 138 x $10^3$ bis 414 x $10^3$ Pa (20 bis 60 psig), nicht-kondensierter abgehender Kohlenwasserstoffrauch und -dampf über Kopf abgezogen werden und besagter schwefelhaltiger Erdölkoks mit einer nickel- und eisenhaltigen Asche und mit besagtem darin gleichförmig dispergierten eisenhaltigen Zusatzstoff vom Boden abgezogen wird.

4.  Verfahren nach Anspruch 2, dadurch gekennzeichnet, daß besagter Verkokungsschritt (i) die Schritte umfaßt: (a) Einbringen des Gemisches aus Schritt (1) bei einer Temperatur im Bereich von 288°C bis 399°C (550°F bis 750°F) in eine Fließbett-Verkokungszone, in der, bei einer Temperatur im Bereich von 538°C bis 649°C (1000°F bis 1200°F) und einem Druck im Bereich von 69 x $10^3$ bis 138 x $10^3$ Pa (10 bis 20 psig), nicht-kondensierter abgehender Kohlenwasserstoffrauch und -dampf über Kopf abgezogen werden und besagter Erdölkoks vom Boden abgezogen wird.

5.  Verfahren nach einem der vorangehenden Ansprüche, dadurch gekennzeichnet, daß eine Calciumverbindung in einer Menge von etwa 2,0 bis unterhalb 8,0 Gew.-% an besagtem eisenhaltigen Zusatzmittel nur beim Anfahren in die Teiloxidationsreaktionszone eingebracht wird, um die Erweichungstemperatur des eisenhaltigen Zusatzmittels zu verringern, und daß dann das Einführen besagter Calciumverbindung unterbrochen wird.

6.  Verfahren nach einem der vorangehenden Ansprüche, dadurch gekennzeichnet, daß das Brennstoff-Ausgangsmaterial besagten flüssigen Brennstoff einschließt und besagter flüssiger Brennstoff durch eine Vakuumdestillationseinheit weiterbefördert wird und daß besagter eisenhaltiger Zusatzstoff in besagten Brennstoff am Zulauf zu oder im Bodenkörper aus der Vakuumdestillationseinheit eingebracht wird.

7.  Verfahren nach einem der vorangehenden Ansprüche, dadurch gekennzeichnet, daß besagter eisenhaltiger Zusatzstoff Eisen und/oder Eisenverbindungen, ausgewählt aus Oxiden, Sulfiden, Sulfaten, Carbonaten, Cyaniden, Chloriden, Nitraten und Gemischen derselben, umfaßt.

8.  Verfahren nach einem der vorangehenden Ansprüche, dadurch gekennzeichnet, daß der eisenhaltige Zusatzstoff einen eisenhaltigen Teil umfaßt, der eine eisen(II)- oder eisen(III)-organische Verbindung, ausgewählt aus Naphthenaten, Oxalaten, Acetaten, Zitraten, Benzoaten, Oleaten, Sulfiden, Tartraten und Gemischen derselben, umfaßt.

9.  Verfahren nach einem der vorangehenden Ansprüche, dadurch gekennzeichnet, daß besagter eisenhaltiger Zusatzstoff Eisenoxid in Mischung mit Calciumoxid umfaßt.

10. Verfahren nach einem der vorangehenden Ansprüche, dadurch gekennzeichnet, daß besagter schwefelhaltiger schwerer flüssiger kohlenwasserstoffhaltiger Brennstoff mit einer nickel- und eisenhaltigen Asche eine pumpbare Aufschlämmung von Erdölkoks in Wasser, flüssigen Kohlenwasserstoffbrennstoff oder Gemischen derselben ist.

11. Verfahren nach einem der vorangehenden Ansprüche, dadurch gekennzeichnet, daß besagtes Brennstoff-Ausgangsmaterial von 0,5 bis 1,5 Gew.-% Schwefel und von 10 bis 400 ppm Silicium enthält.

12. Verfahren nach einem der Ansprüche 1 bis 10, dadurch gekennzeichnet, daß besagtes Brennstoff-Ausgangsmaterial von 0,5 bis 1,5 Gew.-% Schwefel und von 410 ppm bis 7200 ppm oder mehr Silicium enthält.

13. Verfahren nach einem der Ansprüche 1 bis 10, dadurch gekennzeichnet, daß besagtes Brennstoff-Ausgangsmaterial etwa 1,6 bis 4,5 Gew.-% Schwefel und etwa 410 ppm bis 7200 ppm oder mehr Silicium enthält.

14. Verfahren nach einem der Ansprüche 1 bis 10, dadurch gekennzeichnet, daß besagtes Brennstoff-Ausgangsmaterial von 1,6 bis 4,5 Gew.-% Schwefel und von 10 bis 400 ppm Silicium enthält.

15. Verfahren nach einem der vorangehenden Ansprüche, dadurch gekennzeichnet, daß besagter schwefelhaltiger schwerer flüssiger kohlenwasserstoffhaltiger Brennstoff mit nickel- und eisenhaltigen Aschen eine hochsiedende flüssige Erdölcharge zu oder der Bodensatz aus einem Vakuumturm oder einer Fraktionierkolonne ist.

16. Verfahren nach einem der vorangehenden Ansprüche, dadurch gekennzeichnet, daß besagtes Gemisch aus eisenhaltigem Zusatzstoff und Ausgangsmaterial, hergestellt im Herstellungsschritt (1), eine solche Partikelgröße besitzt, daß im wesentlichen das gesamte Gemisch durch ein Sieb der Größe ASTM E-11 Standard Sieve Designation im Bereich von $425 \times 10^{-6}$ m bis $38 \times 10^{-6}$ m (425 Mikron bis 38 Mikron) hindurchgeht.